# EUROPEAN PATENT APPLICATION

(11) **EP 1 075 134 A1**
(43) Date of publication of application: **07.02.2001**
(21) Application number: 99939245.9
(22) Date of filing: 05.03.1999
(51) Int. Cl.: H04M 15/00, H04M 11/00, H04M 1/27, G07F 7/10, G07G 1/12, G07G 1/14, G06F 19/00

(54) **TELEPHONE RATE MANAGING SYSTEM**

(30) Priority: 09.03.1998 JP 7302198
(71) Applicant: Muramatsu, Yasuo, Tokyo 157-0062 (JP); Yokoi, Masato, Chiba-shi, Chiba 266-0005 (JP); Miyake, Tomomi, Yokohama-shi, Kanagawa 246-0033 (JP)
(72) Inventor: Muramatsu, Yasuo, Tokyo 157-0062 (JP); Yokoi, Masato, Chiba-shi, Chiba 266-0005 (JP); Miyake, Tomomi, Yokohama-shi, Kanagawa 246-0033 (JP)
(74) Representative: Hackney, Nigel John
(86) International application number: JP9901072
(87) International publication number: WO9946925

(57) **Abstract**

A telephone rate managing system comprising an autodialer (1) having means for generating PB tones, such as of the telephone number of a connecting telephone company or the user ID, and a store processing terminal(30) provided in a store which deals with said autodialer, a POS terminal(40), a managing host computer(100) of the telephone company, all being interconnected through communication lines. Merchandize information of the autodialer dealt with is sent to the host computer and stored in it. When a call using the autodialer is made, the host computer performs a subtraction processing of the prepaid call charge, in accordance with the call charge ,on the basis of the merchandise information of the autodialer stored in the host computer. Even though coupon information is not written in the autodialer itself, auto-dialing call is thus possible and payment of the telephone charge is possible at a store which deals with autodialer.

## Description

### TECHNICAL FIELD

The present invention relates to a phone card (autodialer) having an identification number (user ID number) for identifying a telephone user and having an autodialing function, sold in a convenience store, etc., a telephone rate managing system when a call is made with the above phone card, and a system of paying for a telephone charge in a convenience store, or the like.

### TECHNICAL BACKGROUND

As one of special phone cards with which international calls can be made, a prepaid card for international calls is conventionally available, which has an ID number and is easily obtained in a convenience store, or the like. This prepaid card is not inserted into a telephone machine unlike a phone card, and a scratch portion on the reverse side of the card is peeled off and an ID number printed there is inputted in a telephone machine to call. A host computer in KDD recognizes the ID number of each card, and subtracts a charged time period of calling from a possible time period of calling.

The above card is becoming popular and coming into greatly wide use, since it does not require any public telephone specialized for international calls but is easily usable with a general public telephone and PHS to make international calling.

However, the above card has the property of a coupon in that price information such as 1,000yen, 3,000yen or 5,000yen is written in the card itself, so that it may be an object to be stolen or may cause great loss when lost. A managing staff member of a convenience store, etc., dealing with such cards is required to handle them under strict control or store them in a safe for protecting them against robbery and loss. Further, the high unit prices of the cards increase an inventory cost on the store.

Moreover, the above card having the property of a coupon is also with problems of robbery and loss during transportation, and transportation companies have to share a large transportation cost like transporting cash itself.

A large money wise cost is required for storing and managing such cards as described above, and furthermore, it should not be overlooked that handling the expensive coupon-like cards by managing staff members of convenience stores which are open for business overnight imposes a straining intense responsibility on them.

It is an object of the present invention to provide a telephone rate managing system using an autodialer which has no property of a coupon, i.e., has no coupon information written in itself but permits auto-dialing calls.

### DISCLOSURE OF THE INVENTION

The present invention is identified by requirements specified in claims as will be described below.

Claims 1 to 7 and 10 to 13 are directed to a system using an autodialer as a fund card, and claims 8, 9 and 14 to 17 are directed to a system using it as a membership card.

The invention of Claim 1 is a telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store which deals with said autodialer,
said connecting telephone company having a managing host computer for storing and managing information on said autodialer dealt with,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text of the merchandize information and the identification code of the terminal to be sent to said managing host computer, from said stored merchandise information,
a means for displaying a bar code identified by said merchandise code and the telephone number of the connecting telephone company, and
a communication control means for sending the electric data text of the merchandise information and the identification code of the terminal to said managing host computer, which is received and stored,
   wherein the telephone rate managing system is characterized in that, when a call using said autodialer is made, said host computer performs a subtraction processing of a prepaid call charge in accordance with a call charge on the basis of the stored merchandise information of said autodialer.

The invention of Claim 2 is a telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store which deals with said autodialer,
said connecting telephone company having a managing host computer for storing and managing information on said autodialer dealt with,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text for the POS terminal and an electric data text of the merchandize information and the identification code of the terminal to be sent to said managing host computer, from said stored merchandise information,
an output means for outputting the electric data text for the POS terminal assembled in said central control means, as a bar code readable with the POS terminal, and
a communication control means for sending the electric data text of the merchandise information and the identification code of the terminal to said managing host computer, which is received and stored,
   wherein the telephone rate managing system is characterized in that, when a call using said autodialer is made, said host computer performs a subtraction processing of a prepaid call charge in accordance with a call charge on the basis of the stored merchandise information of said autodialer.

The invention of Claim 3 is a telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store which deals with said autodialer,
said connecting telephone company having a managing host computer for storing and managing information on said autodialer dealt with,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text for the POS terminal, which electric data text is to be sent to said POS terminal, and an electric data text of the merchandize information and the identification code of the terminal to be sent to said managing host computer, from said stored merchandise information,
a POS output means for outputting the electric data text for the POS terminal assembled in said central control means, and
a communication control means for sending the electric data text of the merchandise information and the identification code of the terminal to said managing host computer, which is received and stored,
   wherein the telephone rate managing system is characterized in that, when a call using said autodialer is made, said host computer performs a subtraction processing of a prepaid call charge in accordance with a call charge on the basis of the stored merchandise information of said autodialer.

The invention of Claim 4 is a telephone rate managing system according to claim 3, wherein the communication control means is a communication control means for encrypting the electric data text before sending it to the managing host computer.

The invention of Claim 5 is a telephone rate managing system according to claim 4, wherein the managing host computer has an interface portion for receiving and decrypting the encrypted electric data text sent from said communication control means.

The invention of Claim 6 is a telephone rate managing system according to any one of claims 3 to 5, wherein the communication lines are public telephone lines.

The invention of Claim 7 is a telephone rate managing method using any system of claims 3 to 5, wherein a user of the autodialer generates PB tones from the telephone number of the connecting telephone company, the identification number identifying the telephone user and the pre-registered abbreviated telephone number of a person to be called up,
the generated PB tone is brought close to a speaker of a public telephone, a subscriber's telephone or a cellular phone, to effect automatic dialing,
and, when a call using said autodialer is made, said host computer detects merchandise information data of said user stored, from the identification number of the user of said autodialer and performs the subtraction processing of a prepaid call charge in accordance with a call charge.

The invention of Claim 8 is a telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store where a bill for call charges with regard to said autodialer can be paid,
said connecting telephone company having a managing host computer for storing and managing information on the autodialer issued,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text for the POS terminal, which electric data text is to be sent to said POS terminal, and an electric data text of the merchandize information and the identification code of the terminal to be sent to said managing host computer, from said stored merchandise information,
a POS output means for outputting the electric data text for the POS terminal assembled in said central control means, and
a communication control means for sending the electric data text of the merchandise information and the identification code of the terminal to said managing host computer, which is received and stored,
   wherein the telephone rate managing system is characterized in that, when a call using said autodialer is made, said host computer performs an addition processing of a call charge to bill in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.
The invention of Claim 9 is a telephone rate managing method using the system of claim 8, wherein a user of the autodialer generates PB tones from the telephone number of the connecting telephone company, the identification number identifying the telephone user and the pre-registered abbreviated telephone number of a person to be called up,
the generated PB tone is brought close to a transmitter of a public telephone, a subscriber's telephone or a cellular phone, to effect automatic dialing,
when automatic dialing is made using said autodialer, said host computer performs an addition processing of a call charge to be billed in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

The invention of Claim 10 is a telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal including an automatic cash depositing and paying unit having the function of allowing automatic deposit and payment of cash, provided in a store dealing with said autodialer,
said connecting telephone company having a managing host computer for storing and managing information on the autodialer dealt with,
said store processing terminal and said managing host computer being interconnected through communication lines,
said automatic cash depositing and paying unit being connected to a host computer of a banking institution managing the unit,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text of the merchandize information and the identification code of the terminal to be sent to said managing host computer, from said stored merchandise information, and
a communication control means for sending the electric data text of the merchandise information and the identification code of the terminal to said managing host computer, which is received and stored,
   wherein the telephone rate managing system is characterized in that, when a call using said autodialer is made, said host computer performs a subtraction processing of a prepaid call charge in accordance with a call charge on the basis of the stored merchandise information of said autodialer.

The invention of Claim 11 is a telephone rate managing system according to claim 10, wherein the host computer of the banking institution has at least an account of said connecting telephone company.

The invention of Claim 12 is a telephone rate managing method using the system of claim 10 or 11, wherein a user of the autodialer generates PB tones from the telephone number of the connecting telephone company, the identification number identifying the telephone user and the pre-registered abbreviated telephone number of a person to be called up,
the generated PB tone is brought close to a transmitter of a public telephone, a subscriber's telephone or a cellular phone, to effect automatic dialing,
and, when a call using said autodialer is made, said host computer detects merchandise information data of said user stored, from the identification number of the user of said autodialer and performs the subtraction processing of a prepaid call charge in accordance with a call charge.

The invention of Claim 13 is a telephone rate managing system according to claim 12, wherein the host computer of the banking institute has at least an account of said connecting telephone company.

The invention of Claim 14 is a telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal including an automatic cash depositing and paying unit having the function of allowing automatic deposit and payment of cash, provided in a store where a bill of call charges with regard to said autodialer can be paid,
said connecting telephone company having a managing host computer for storing and managing information on the autodialer issued,
said store processing terminal and said managing host computer being interconnected through communication lines,
said automatic cash depositing and paying unit being connected to a host computer of a banking institution managing the unit,
said store processing terminal having a pre-registered identification number and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text of the merchandize information and the identification code of the terminal to be sent to said managing host computer, from said stored merchandise information, and
a communication control means for sending the electric data text of the merchandise information and the identification code of the terminal to said managing host computer, which is received and stored,
   wherein the telephone rate managing system is characterized in that, when a call using said autodialer is made, said host computer performs an addition processing of a call charge to bill in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

The invention of Claim 15 is a telephone rate managing system according to claim 14, wherein the host computer of the banking institute has at least an account of said connecting telephone company.

The invention of Claim 16 is a telephone rate managing method using the system of claim 14 or 15, wherein a user of the autodialer generates PB tones from the telephone number of the connecting telephone company, the identification number identifying the telephone user and the pre-registered abbreviated telephone number of a person to be called up,
the generated PB tone is brought close to a transmitter of a public telephone, a subscriber's telephone or a cellular phone, to effect automatic dialing,
when automatic dialing is made using said autodialer, said host computer performs an addition processing of a call charge to be billed in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

The Invention of Claim 17 is a telephone rate managing system according to claim 16, wherein the host computer of the banking institute has at least an account of said connecting telephone company.

### BRIEF DESCRIPTION OF DRAWINGS

Fig. 1 is a block diagram showing a constitution of the autodialer.
Fig. 2 is a front view of the autodialer.
Fig. 3 is a block diagram showing a constitution of the store processing terminal.
Fig. 4 is a block diagram showing another constitution of the store processing terminal.
Fig. 5 is a front view of the store processing terminal.
Fig. 6 shows a format of user ID registration files.
Fig. 7 shows a format of a billing charge management file.
Fig. 8 is a block diagram of a store processing terminal having an ATM terminal.
Fig. 9 is a front view of an ATM unit.
Fig. 10 is a flow sheet showing the process of transaction of an autodialer through an ATM unit.
Fig. 11 is a flow sheet showing the process of transaction of an autodialer through an ATM unit.

In Figures, 1 shows an autodialer, 2 shows a ROM portion, 3 shows a RAM portion, 5 shows a data input portion, 7 shows a PB signal generating portion, 9 shows a speaker, 15 shows a central processing portion (CPU portion), 17 shows a contact point, 30 shows a store processing terminal, 30' shows a terminal unit, 33 shows a first input means, 33' shows an interface, 35 shows a second input means, 37 shows a storage means (RAM portion), 38 shows a central control means, 39 shows an output means for outputting an electric data text for a POS terminal, 40 shows a POS terminal, 41 shows a communication control means, 50 shows an ATM unit, 53 shows a card leader means, 55 shows a display means, 57 shows a paper money handling means, 59 shows a coin handling means, 60 shows an ATM central control means, 63 shows a cash managing means, 65 shows an ATM storage means, 67 shows an ATM communication control means, 69 shows a card insertion slot, 69' shows a bill insertion slot, 70 shows a bankbook insertion slot, 71 shows a paper money in and out port, 73 shows a coin in and out port, 75 shows a touch panel display portion, 100 shows a managing host computer of a connecting telephone company, 103 shows a host central control means, 105 shows a host managing memory, 107 shows a host billing management means, 109 shows an interface portion of the host computer, 200 shows a managing host computer of a bank, 201 shows a bank communication control means, 203 shows an account managing file, 208 shows a bank central control means, 203-1 shows a customer account of a purchaser, 203-2 shows an account of a telephone Connecting company, L shows an electric data text of a merchandise code to be outputted to the POS terminal, M shows an electric data text of merchandise information, etc., to be sent to the host computer, 5a shows a numeric keypad, 5b shows function keys, 5c shows abbreviated number keys.

### BEST MODES FOR PRACTICING THE INVENTION

Modes of practice of the present invention will be specifically explained hereinafter.

### (Autodialer)

The autodialer used in the telephone rate managing system of the present invention will be explained first.

The autodialer refers to a portable device capable of reading a pre-registered telephone number through touch keys and generating a push button (PB) signal for telephone from a speaker, and it is generally known.

The autodialer has touch keys corresponding to dial keys of a push-button telephone, stores a telephone number inputted with the touch keys and outputs PB tones (DTMF (Dual-Tone Multiple-Frequency) signal sounds) corresponding to keys of a push-button telephone for the registered telephone number from a speaker. The outputted PB tones are sent through a transmitter of a telephone to operate a telephone switchboard.

The autodialer used in the present invention has characteristic features in that it has (1) at least pre-registered telephone number of a connecting telephone company and a pre-registered identification number identifying a telephone user, (2) has the function of registering telephone numbers of persons to be called up, as abbreviated numbers, and (3) has means of generating PB tones of these registered telephone numbers.

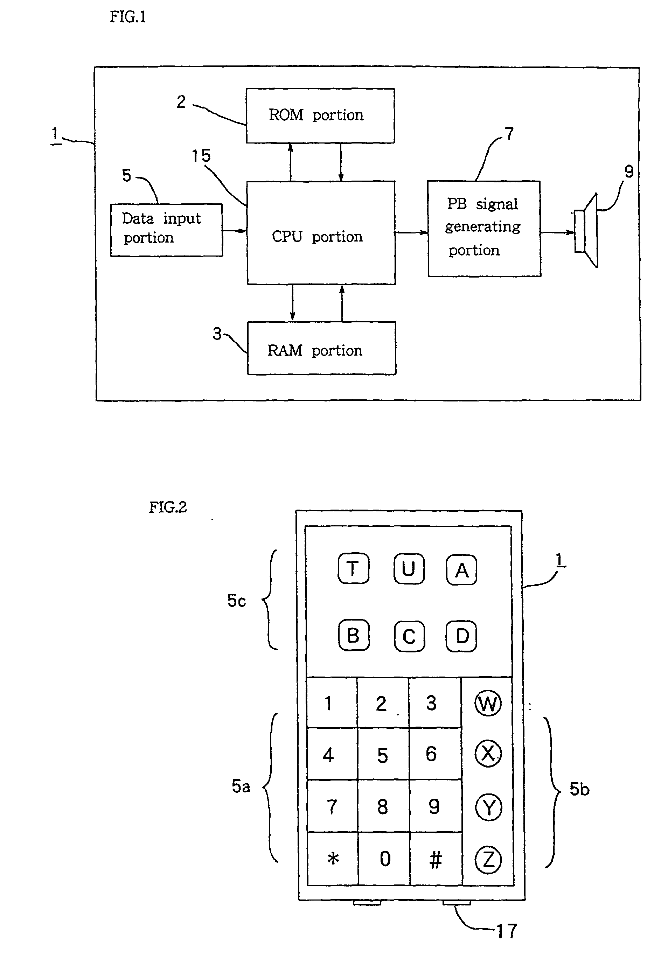

Fig. 1 is a block diagram of one example of the constitution of the above autodialer, and Fig. 2 is a front view of the autodialer.

In Fig. 1, 2 shows a ROM portion, and it stores OS and a control program and also stores at least the telephone number of a connecting telephone company (the connecting telephone company refers to a telephone company which issues the autodialer and performs a subtraction processing and a billing processing to a prepaid amount in accordance with charges of telephone calls) and an identification number identifying a telephone user. Further, 3 shows a RAM portion, which is a user memory portion in which a user of the autodialer stores and registers telephone numbers of persons to be called up, as abbreviated numbers. The above telephone numbers are inputted through numeric keys 5a and function keys 5b of the data input portion 5.

These registered numbers can be sent to the PB signal generating portion 7 and outputted through the speaker 9 (which is, for example, an electronic speaker provided on the reverse surface of the autodialer) as PB tones.

15 is a central processing portion (CPU portion), and performs inputting of registered telephone numbers to the RAM portion through keys, reading of the OS and the control program stored and the telephone numbers stored in the ROM portion and the RAM portion, and sending of PB tones. The autodialer used in the present invention has no function of writing coupon information.

The autodialer used in the present invention is sold in a store dealing with it, such as a convenience store, in a state where it has at least a pre-registered telephone number of a connecting telephone company and a pre-registered identification number identifying a telephone user (to be also referred to as "user ID" hereinafter) in the ROM portion thereof as described above.

As described above, the autodialer used in the present invention has no function of writing coupon information from the beginning, so that it has no other information such as registered information of some thousands yen' worth of calls, at a stage where it is displayed in a store. That is, differing from prepaid cards such as a phone card, the autodialer is sold in a state where it does not have any coupon value.

### (Store processing terminal installed in dealing store)

The store for the sale of the above autodialer has a store processing terminal for processing merchandise information having regard to the autodialer, such as the telephone number of the connecting telephone company, the identification number identifying a telephone user, a merchandise code and a transaction code. The store is, for example, a convenience store as described above, and it generally deals in merchandise in a quantity of thousands to tens of thousands. All of sale information data of merchandise dealt in there are reported one by one to headquarters as a franchiser through telephone lines, and the like. The headquarters catches what goods are so-called most popular goods every minute, and lines of merchandise are supplied and developed so as to meet with consumers' needs. Further, customer information is managed. The above merchandise management is what is well known as POS (information control on point of sale) system.

Generally, a register connected to a bar code reader is installed on a checkout counter in each store, and the resister also works as a POS terminal. Merchandise information data inputted from bar codes is generally sent to the headquarters of each store through another computer and a modem in each store and through communication lines such as telephone lines.

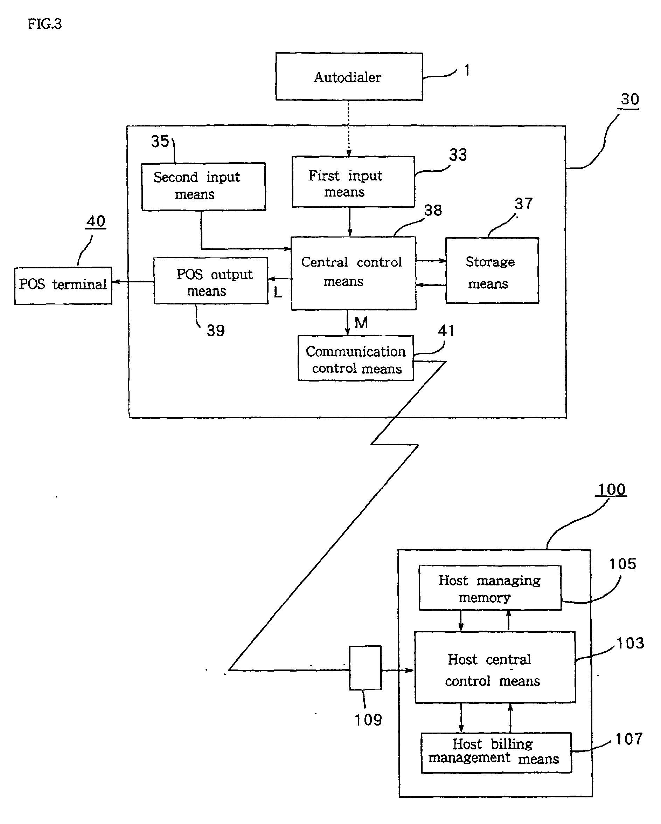

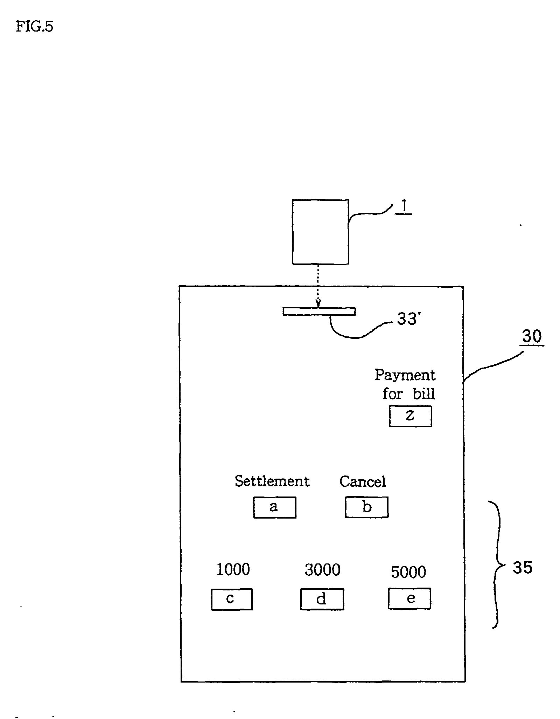

Fig. 3 is a block diagram of one example of the store processing terminal 30. Fig. 5 is a front view thereof, showing a layout of inputting buttons. The inputting buttons may be button switches, or they may be touch-screen (touch panel) switches on a liquid crystal screen.

In the Figure, 40 shows a POS terminal installed in each store, and 100 shows a managing host computer of a connecting telephone company. The host computer stores and manages all of information on each autodialer issued and dealt in. -

In Fig. 3, the terminal 30 has the following constitution. That is, it comprises a pre-registered identification code (to be also referred to as "terminal ID" hereinafter) of the terminal,
a first input means 33 for reading and inputting the telephone number and the identification number registered in the ROM of the above autodialer 1 when the autodialer is connected thereto,
a second input means 35 for inputting a merchandise code and a transaction code with buttons,
a storage means 37 for storing merchandise information including the above telephone number, the identification number, the merchandise code and the transaction code inputted with the first and second input means,
a central control means 38 for assembling an electric data text for a post terminal, to be outputted to the post terminal 40 of each store above, and an electric data text of the merchandise information and the identification code of the terminal to be sent to the above managing host computer 100, from the above stored merchandise information,
a POS output means 39 for outputting the electric data text assembled in the above central control means for the POS terminal, and
a communication control means 41 for sending the electric data text of the merchandise information and the identification code of the terminal to the above managing host computer, which are to be received and stored.

The above storage means 37 has a ROM portion and a RAM portion. The identification code of the terminal is pre-stored in the ROM portion, and the above merchandise information including the telephone number, the identification number, the merchandise code and the transaction code inputted from the first and second input means is stored in the RAM portion.

In the present invention, it is not necessarily required to constitute the POS terminal and the store processing terminal as physically distinct two devices. The above store processing terminal may be incorporated into the POS terminal to form an integrated unit as required.

### (Performance of the terminal in transaction in each store)

The autodialer is sold with the above store processing terminal in the following manner.

When a customer wishing to purchase an autodialer (to be sometimes referred to as "purchaser" hereinafter) comes to purchase the autodialer, a sale staff member of a store (to be referred to as "a salesclerk" hereinafter) connects an autodialer 1 to an interface 33' to the input means 33 of the store processing terminal 30.

Although not specially limited, the above connection is carried out, for example, by means of a pin-connector using a male (female) pin formed on the autodialer side and a female (male) pin formed on the terminal side. Otherwise, there may be employed a constitution in which contact points 17 are formed on these two members and the contact points are connected to each other by making contact or non-contact at the interface portion 33'. For securing the connection, preferably, the terminal is provided with an insertion slot for the autodialer, and the autodialer is connected in a state where the autodialer is inserted and held. Further, there may be employed a constitution in which, instead of inserting the autodialer through the insertion slot, a cassette containing a plurality of autodialers is set inside the store processing terminal, and one autodialer is automatically taken out of the cassette, moved with a proper moving mechanism and electrically connected at the interface by button operation from outside.

In the above manner, the above autodialer 1 is connected to the first input means 33, whereby the telephone number and the identification number pre-registered in the ROM of the autodialer are read and inputted.

Then, the salesclerk inputs the merchandise code and the transaction code to the terminal with the second input means. This input means is, for example, a button input means, and the inputting is carried out by pressing buttons (a, b, c, d, e). The a to e may be a touch panel as described already.

In the present invention, the term "merchandise code" refers to a code defining a class of the merchandise (e.g., amount such as 1,000 yen, 3,000 yen, 5,000 yen, or the like, volume of call, or time length of call).

As shown in Fig. 5, for example, a and b are buttons for inputting the transaction code, and for example, a corresponds to a settling button, and b corresponds to a canceling button. Further, c to e are "amount buttons". For example, c is a button corresponding to 1,000 yen, d is a button corresponding to 3,000 yen, and e is a button corresponding to 5,000 yen. z is a button for paying, for example, a bill when the autodialer is used as a membership card as will be described later.

When a purchaser selects a call charge worth 5,000 yen and pays the amount, a salesclerk presses the button e (5,000 yen) and also presses the settling button a to prove the payment of the amount, whereby finally settled transaction information of the merchandise code, the transaction code, etc., is inputted, which constitutes final transaction information. The, when the canceling button b is pressed, inputting can be redone.

In the above manner, the telephone number of the connecting company, the identification number identifying a telephone user (user ID), the merchandise code and the transaction code (to be referred to as "merchandise information" hereinafter) inputted by the first and second input means are received and stored in the RAM portion of the storage means 37 in Fig. 3. The ROM portion of the storage means 37 has the identification code of the terminal (terminal ID) pre-registered as already described.

The central control means 38 assembles an electric data text L for a POS terminal, to be outputted to the POS terminal 40, from the above stored merchandise information, and further assembles an electric data text M of the merchandise information and the terminal identification code, to be sent to the managing host computer 100. The POS terminal prints out a result of the above transaction as a receipt.

The electric data text L for a POS terminal is outputted to the POS terminal 40 with the POS output means 39, and the electric data text M of the merchandise information and the identification code of the terminal is sent to the host computer through communication lines with the communication control means 41. Preferably, the sending of the electric data text of the merchandise information, etc., is executed when the final transaction information is inputted with the settling button. The sent electric data text M of the merchandise information, etc., is received and stored in the host computer of the connecting telephone company.

Preferably, the store processing terminal and the POS terminal are connected, for example, with a fork-end connecter, and a generally used bar code reader and the processing terminal are connected to the POS terminal in parallel.

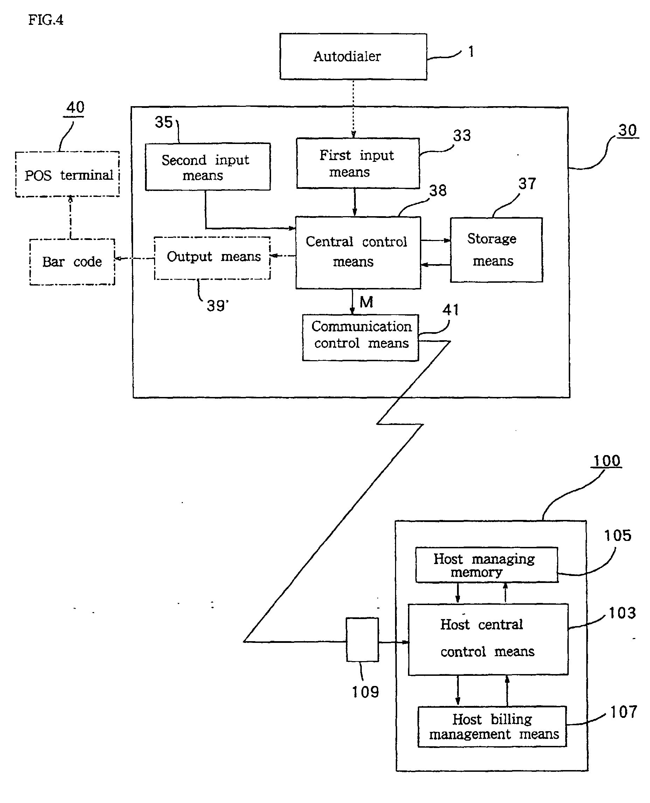

In another embodiment of the present invention, the above processing terminal has no output means to the POS terminal as shown in Fig. 4.

This embodiment uses a means for displaying a bar code identified by the merchandise code and the telephone number of the connecting telephone company. That is, there is provided a table (merchandise/bar code table) showing bar codes identified by the merchandise codes and the telephone number of the connecting telephone company, and a salesclerk allows the bar code reader to read a bar code on the table, which bar code corresponds, for example, to 5,000 yen, to input such data to the POS terminal.

In further another embodiment, the processing terminal similarly has an output means 39' to output data of a merchandise code as shown in Fig. 4, and this output means outputs a bar code identified by the merchandise code and the telephone number of the connecting telephone company. This output may be printed out on a printing medium such as paper as a hard copy, or may be displayed on a screen with a display means such as CRT or LCD. A salesclerk similarly allows this bar code information with the bar code reader, to input such data to the POS terminal. This bar code may be a so-called bar code, or it may be a symbolized code such as OCR characters, MICR characters or caltra code. In this case, the bar code reader refers to a reader that can read such a code.

### (transaction in the case of store processing terminal of other type)

The above operation shows an example in which input procedures are carried out with the assistance of a salesclerk. However, a customer can execute the transaction by carrying out the above operation with a bilateral store processing terminal on which a customer himself or herself operates a touch panel.

When the above bilateral terminal is used, the terminal may be a terminal specialized for dealing in autodialers, or it may be a so-called multimedia terminal having other functions in addition to the function of dealing in autodialers. That is, the terminal may have the function of selling and replacing game programs and the function of booking or reserving tickets for concerts and movies and transportations of travels and tourisms in addition to the function of dealing in the autodialers.

### (Case of ATM terminal)

The store processing terminal used in the present invention may be a terminal having not only the above bilateral function but also the function of an automatic teller machine as will be described in detail below. The automatic teller machine (to be referred to as "ATM" hereinafter) is an automatic machine with which a customer deposits cash (receipt or deposit), draws cash (payment, withdrawal) and transfers cash. Generally, the above procedures are carried out with a cash card (to be referred to as "card" hereinafter) and/or a bankbook. The above bank includes not only a so-called bank (licensed under the law) but also financial institutions in a broad sense such as a non-bank, a credit sale agent company and a leasing company.

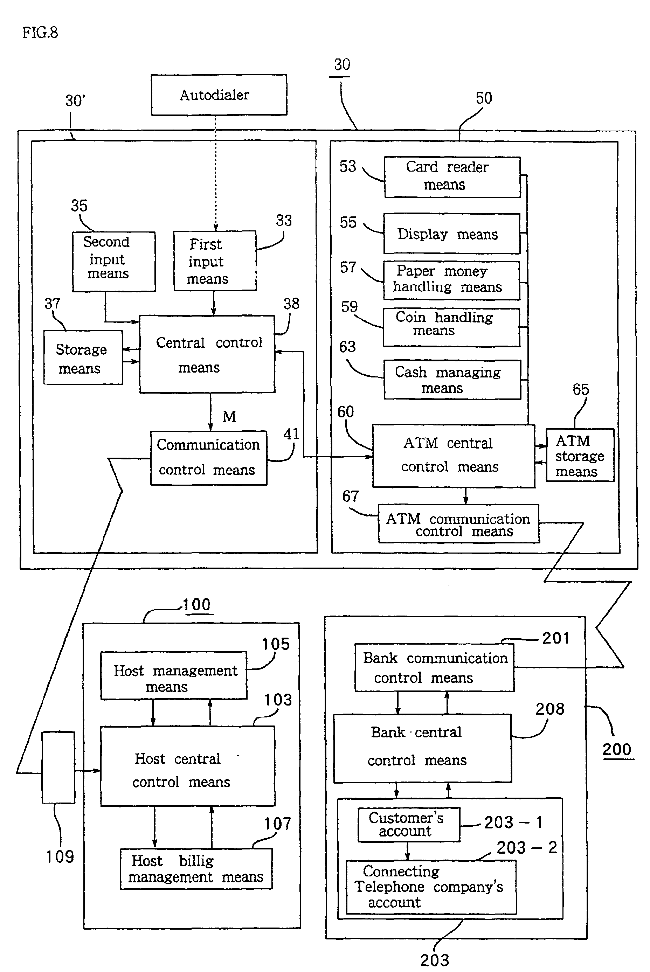

In this case, the store processing terminal 30 is constituted of a terminal unit 30' and an ATM unit 50 as shown in the block diagram of Fig. 8.

Differing from the store processing unit 30 shown in Fig. 3, the terminal unit 30' is not necessarily required to be connected to the POS terminal, and in such a case, the terminal unit 30' has no POS output means for an electric data text of the merchandise code to the POS terminal as shown Fig. 8.

The above ATM unit has a constitution and functions basically similar to those of a conventionally known ATM unit. That is, the ATM unit has a card reader means 53, a display means 55, a paper money handling means 57, a coin handling means 59, an ATM central control means 60, a cash managing means 63, an ATM storage means 65 and an ATM communication control means 67. Further, the ATM unit may have a slip preparation means and a bank book printing means.

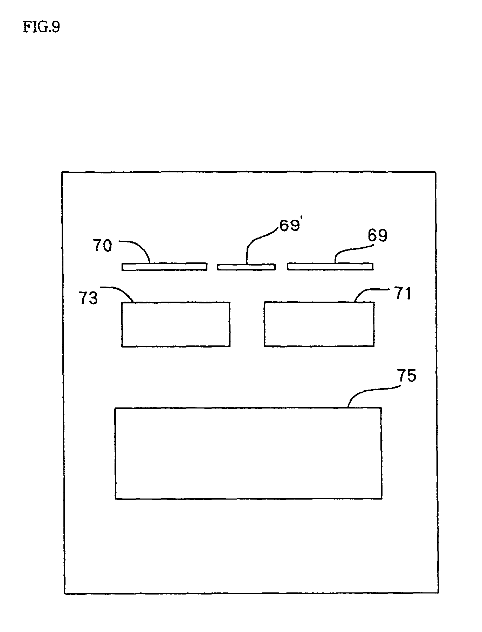

Similarly to a usual ATM unit, the above ATM unit for serving customers (purchasers) has a card insertion slot 69, a bank note insertion slot 70, a paper money in and out port, a coin in and out port 73, a touch panel display portion 75, and the like as shown in Fig. 9

The card reader means 53 is a portion for reading and writing data in a record portion (magnetic stripe), for example, of a magnetic card inserted through the card insertion slot 69.

The display means 55 is for displaying guidance on the touch panel display portion 75 for a customer (purchaser) and for displaying a touch panel for the customer selecting and inputting a transaction type and an amount of money.

The paper money handling means 57 and the coin handling means 59 is for discriminating and counting paper money and coins placed through the paper money in and out port 71 and the coin in and out port 73 to receive the same, and for taking out a proper amount of paper money and/or coins from paper money and coins reserved in advance to pay them back through the paper money in and out port and/or the coin in and out port.

The ATM central control means 60 is for totally controlling the card reader means 53, the display means 55, the paper money handling means 57, the coin handling means 59 and a cash managing means 63 to manage various information on receipt and payment of cash according to a managing program stored in the ATM storage means 65. Further, a result of the transaction is also stored in the ATM storage means 65.

The ATM central control means 60 of the ATM unit 50 and the central control means 38 of the store processing terminal 30' are connected to each other, and data processed in each unit is exchanged between these two units. Further, it is not necessarily required to provide the central control means 38 of the store processing terminal and the ATM central control means 60 of the ATM unit as two separate means, and one central control means may be provided which works as these two means.

The ATM unit 50 is connected to a managing host computer 200 of the bank with an ATM communication control means 67 through communication lines and a bank communication control means 201. The above managing host computer is constituted of the bank communication control means 201, account managing files 203 and a bank central control means 208.

The account managing files 203 of the bank preferably include a customer (purchaser) account 203-1 and an account 203-2 of the connecting telephone company, and desirably, the bank central control means 208 performs a managing operation of these data together with the managing of the bank communication control means 201.

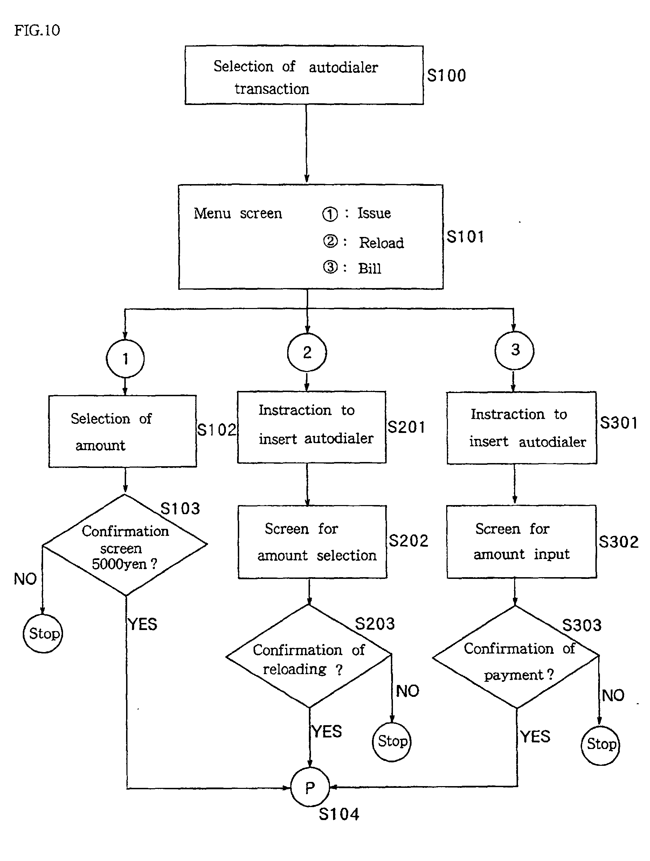

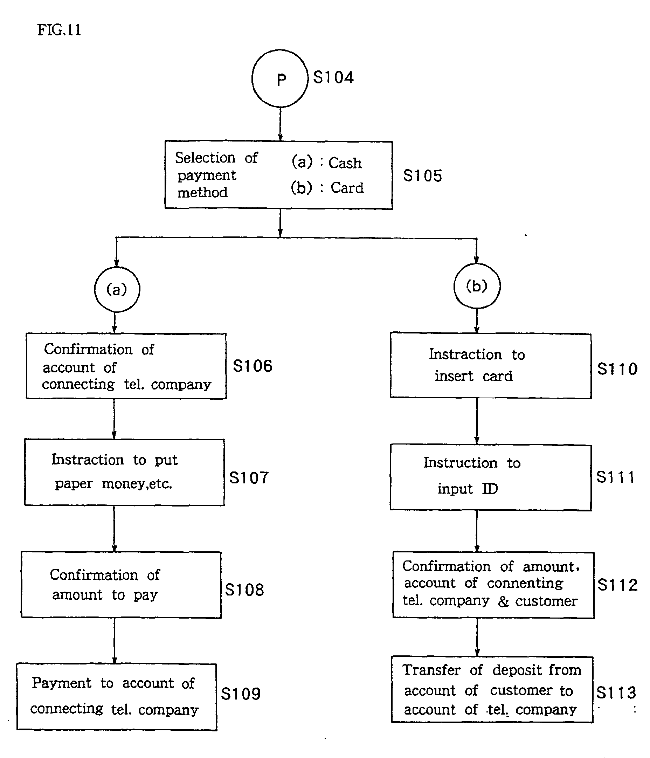

The transaction process will be explained with reference to flow sheets shown in Figs. 10 and 11.

First, a purchaser selects the transaction of an autodialer (Step S100), and selects a type of the transaction of the autodialer (Step S101). In a menu, a selection is made, for example, among ① issue of a new autodialer, ② reloading of an autodialer (additional purchase) and ③ payment of a bill.

The case of ① the issue of a new autodialer will be explained below, and ② the reloading of an autodialer (additional purchase) and ③ the payment of a bill will be explained later.

When (1) the issue of a new autodialer is selected in Step S101, a display screen is switched to an amount selection screen, and for example, 5,000 yen is selected on a touch panel (Step S102).

In the store processing terminal 30', according to Fig. 8, one autodialer hold in a tray portion is released from its holding and taken out, and the telephone number and the identification number registered in the ROM portion of the above autodialer are read and inputted. Further, the selected amount 5,000 yen is inputted with the second input means 35, and stored in the storage means 37.

The display screen is switched to a confirmation screen for confirming whether or not to issue the autodialer for 5,000 yen (Step S103). When the issue is confirmed (affirmed), a payment step P follows (Step S104). The payment step P is carried out through the ATM unit.

In a payment method selection screen (Step S105), payment by cash (a) or payment by card (b) is selected.

The payment by cash (a) refers to a method of paying cash in the account 203-2 of the connecting telephone company. The payment by card (b) refers to a method of transferring a corresponding amount from the account 203-1 of a customer to the account 203-2 of the connecting telephone company.

When the payment by cash (a) is selected, the account of the connection telephone company is shown on the screen, and the account is confirmed (Step S106). According to an instruction to put paper money, etc. (Step S107), an amount of money for the payment is confirmed (Step S108), and the payment is effected by paper money handling means 57. The data of the payment is sent to the managing host computer 200 connected to the above ATM unit 50 through lines, and the amount of money is paid to the account 203-2 of the connecting telephone company (Step S109). The ATM central control means 60 receives information of completion of the payment from the bank communication control means 201 through the lines, and transfers the information to the central control means 38 of the store processing unit 30'.

The central control means 38 assembles an electric data text M of merchandise information and the identification code of the terminal to be sent to the managing host computer 100 of the connecting telephone company. The text M is sent with the communication control means 41 through communication lines, received and stored in the host computer of the connecting telephone company and then processed as has been already described.

When the payment by card (b) is selected, a card is inserted and a personal identification number (ID) is inputted according to an instruction to insert a card (Step S110) and an instruction to input a personal identification (ID) number (Step S111).

A displayed screen shows a purchase amount, the account of the connecting telephone company and the account of a customer, and the customer is requested to confirm these (Step S112). When these are confirmed, an amount (5,000 yen in this case) is transferred from the account of the customer to the account of the connecting telephone company (Step S113).

Similarly to the cash transaction, information of completion of the payment to the account 203-2 of the connecting telephone company is sent back, and the ATM central control means 60 receives the information, and transfers the information to the central control means 38 of the store processing unit 30'. The central control means assembles an electric data text M of merchandise information and the identification code of the terminal to be sent to the managing host computer 100 of the connecting telephone company. The text M is sent with the communication control means 41 through communication lines, and received and stored in the host computer of the connecting telephone company.

### (Managing file of managing host computer)

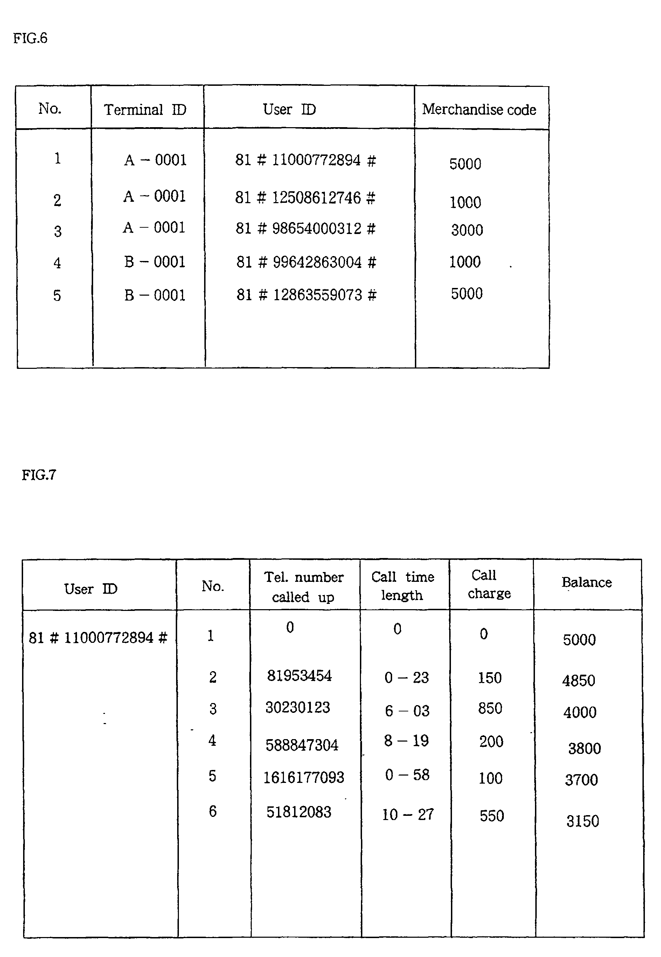

Fig. 6 shows one example of format of data storage, the data being stored in the memory of the host computer. The data is stored, for example, as "ID registered file of autodialers".

The file is constituted, for example, of a terminal ID area, a user ID area and a merchandise code area. For example, in an example of No. 1, a terminal ID data ("A-0001") is written in the terminal ID area, a user ID ("81#11000772894#") is written in the use ID area, and a merchandise code ("5,000") is written in the merchandise code area.

In the host computer, preferably, for performing a billing processing when each registered ID user uses the autodialer, a "billing charge management file" having the format shown in Fig. 7 is prepared with regard to every user ID. Figure shows a file corresponding to the use ID ("81#11000772894#"), and the file shows a balance of 5,000 yen when the autodialer is registered (No. 1).

For maintaining the confidentiality of merchandise information data communication through the above communication lines, preferably, the information data M is encrypted. In this case, preferably, the above communication control means 41 shown in Fig. 3 has means of encrypting an electric text and sending the encrypted electric text to the managing host computer, and the host computer has an interface portion 109 for receiving and decrypting the encrypted electric text sent from the above communication control means. Specifically, an encrypting/decrypting program is stored in a storage device of a hard disk or an expansion board of each of communication terminals such as the communication control means and the interface portion, and when communication is made, a plaintext of the information data M is encrypted in the communication control means as a transmission terminal, and transmitted as an encrypted text. The encrypted text is received and decrypted in the above interface portion as a receiving terminal. IC cards specialized for encryption and decryption may be connected to these terminals. The managing host computer may have a communication control means, and the above interface portion may be included therein.

The communication lines may be leased lines or switched lines. When switched lines are used, public telephone lines using a voice frequency band of 300 to 3,400 Hz are sufficient for attaining the above object. Further, integrated services digital network (ISDN) lines may be used instead of the above analog lines. Naturally, when the former analog lines are used, each of the communication control means and the interface portion is required to have a modem (modulator-demodulator), and when the latter digital lines are used, a DSU (digital service unit) and a TA (terminal adaptor) are required in place of the modem.

### (Registration of abbreviated number)

The autodialer used in the present invention has, for example, an input keyboard layout as shown in Fig. 2. 5a shows numeric keys, for example, having the same layout as the button layout of a PB dialing telephone set, 5b (W, X, Y, Z) shows function keys used for registration of an abbreviated number and temporary registration (registration of a telephone number other than an abbreviated telephone number), 5c (T, U, A, B, C, D) shows abbreviated number keys. A user uses these keys to register a telephone number of a person to call up in the RAM portion 3 which is a user memory. The registering operation may be designed as required and shall not be specially limited. For example, key inputting is carried out in the order of an abbreviated number key A → function key W → telephone number "**********" → function key A, whereby the abbreviated key A is assigned to the telephone number "**********". X is a dialing button for temporary registration, and Y is a button for clearing the registered number.

In this example, a key T corresponds to the telephone number of the connecting telephone company, and a key U corresponds to the identification number (user ID) identifying a telephone user. A user can therefore assign A, B, C and D to the abbreviated registration of telephone numbers.

As already described, when an abbreviated number key is pressed, the PB tone of a registered number is outputted from a speaker 9.

### (Call operation using the autodialer)

The autodialer of the present invention can be used with any telephone so long as it is one of subscriber's telephone, a public telephone and a cellular phone (including PHS (personal handy-phone system)).

One example of operation thereof will be explained below.

A user presses the key T of the autodialer first, to generate the PB tone of the telephone number of the connecting telephone company, and the PB tone is sent through a transmitter or a terminal telephone, to operate (a switchboard of) the connecting telephone company. When a dial tone of the switchboard is heard, the PB tone of the identification number (user ID) identifying the telephone user is sent. The user ID is sent to the managing host computer of the connecting telephone company through the switchboard. The host central control means 103 retrieves the host managing memory 105 storing the user ID. That is, specifically, the "user ID registration file" in Fig. 6 is opened and retrieved, to search for the user ID. At the same time, the "billing charge management file" prepared with regard to every user ID is opened to check a billed state (balance of a prepaid charge/callable length of time). In the case shown in Fig. 7, the callable length of time of the user ID (81#11000772894#) is read to be 3,150 yen. The host computer informs the user that the callable length of time as a balance is 3,150 yen with an automatic voice means through the terminal telephone with which the autodialer is used, and a call is permitted.

The user who is permitted to call is press, for example, the abbreviated number key A to generate the PB tone of the previously registered telephone number "*******". The switchboard performs a connection to a line corresponding to the PB tone, and this information is also simultaneously transmitted to the host computer 100. The host central control means 103 of the host computer recognizes a response from the telephone called up and then starts a host billing management means 107. The billing management means processes billing for a time period of the call, and after the call is finished, the billing management means records the telephone number called up, the time period of the call, a billed charge (call charge), a callable time length (balance of money), etc., in the "billing charge management file" of the user ID. Management data may be overwritten to retain a final data alone. Preferably, a history as shown in Fig. 7 is retained for making it possible to output a management report so as to comply with demands such as a demand from the user.

In the present invention, "when a call using the autodialer is made" includes not only a case when a call is made by actually generating a PB tone with the autodialer but also a case, for example, when the telephone number of the connecting telephone company and the identification number (user ID) identifying a telephone user, registered in the autodialer, is button-inputted with a subscriber's telephone, a cellular phone, PHS, a mobile data terminal such as a mobile computer or a personal computer and a PB tone is generated with the subscriber's telephone, or the like.

### (Additional purchase of call charge using autodialer)

When the "billing charge management file" of a user ID is opened to show that the callable time length (balance of prepaid charge) is equivalent to, or less than, a predetermined amount, for example, 10 yen, the host computer informs the user of a telephone terminal to that effect, requests for additional purchase of a call charge with regard to the user ID, and makes no connection to a line. The purchase of a call charge in this case is carried out as follows.

In principle, it is sufficient to carry out the same procedures as those (in the operation of the terminal during the purchase in the store) in the first purchase of the autodialer.

The salesclerk who is to help the purchase of the additional call charge connects the autodialer 1 to which the additional call charge is to be added to the interface 33' of the first input means 33 of a store processing terminal 30, to read and input the telephone number and the identification number pre-registered in the ROM thereof. As already described, the identification code (terminal ID) identifying the above store is pre-registered in the terminal.

Then, the salesclerk manually presses buttons (a, b, c, d, e) of the button input means(a second input means) to input a merchandise code and a transaction code.

When 5,000 yen is paid as a prepaid charge for calls, the salesclerk presses the (5,000 yen) button e and presses the settling button a which indicates payment of the amount, to input the merchandise code and the transaction code, and this data constitutes final transaction information.

According to the already discussed process, an electric data text L for a POS terminal is outputted to the POS terminal 40 with the POS output means 39, and an electric data text M of the merchandise information and the terminal identification code is sent to the host computer through communication lines with the communication control means 41.

The host computer retrieves a "billing charge management file" of the corresponding user ID, writes therein that the amount (e.g., 5,000 yen) has been newly paid and add the amount to a balance to record a total amount. For example, when 5,000 yen for a call charge is newly paid in addition to a balance in the amount of 1,000 yen, 6,000 yen is written in the "billing charge management file" as a callable amount balance.

Reloading (additional purchase) in the autodialer with the ATM terminal will be explained.

Basically, the reloading is the same as the issue of a new autodialer. In the step S101 shown in Fig. 10, ② reloading of autodialer is selected. According to an instruction to insert an autodialer (Step S201), the autodialer to be reloaded is connected to the interface 33' of the first input means 33 of the store processing terminal unit 30' by inserting the autodialer through an autodialer insertion slot provided in the terminal, and the telephone number and the identification number pre-registered in the ROM of the autodialer are read and inputted. A display screen is switched to an amount selection screen, and, for example, 5,000 yen is selected on the touch panel (Step S202).

Further, the selected amount 5,000 yen is inputted with the second input means and stored in the storage means 37.

Then, similarly, the display screen is switched to a confirmation screen for confirming whether or not to issue the autodialer in the amount of 5,000 yen (Step S203), and when the issue is confirmed (affirmed), a payment step P follows (Step S104). The payment step P is carried out through the ATM unit. In a payment method selection screen (Step S105), payment by cash (a) or payment by card (b) can be selected in the same manner as in the case of the issue of a new autodialer.

When the bank host computer informs back that payment to the account of the connecting telephone company is completed, the ATM central control means 60 sends the information to the central control means 38 of the store processing terminal unit 30', and the central control means assembles an electric data text M of the merchandise information and the identification code of the terminal to be sent to the managing host computer 100 of the connecting telephone company. The text is sent with the communication control means 41 through communication lines, and received and stored in the host computer of the connecting telephone company.

### (Case of membership card)

The above explanations refer to the telephone rate managing systems using the autodialer as a fund card. A telephone rate managing system using the autodialer as a membership card will be explained below.

In principle, the use of an autodialer as a membership card does not differ from the use thereof as a fund card. When an autodialer is used as a membership card, the managing host computer of a connecting telephone company performs an addition processing of a call charge to be billed, in accordance with a call charge amount when a call is made, on the basis of stored information with regard to an issued user ID, and further, the managing host computer issues a bill of call charges to the membership card user.

The billed call charge is paid through a store processing terminal installed in a store where payment of the billed call charge can be made with regard to the autodialer.

### (Issuance of autodialer)

In general, a person who reguests for the issuance of an autodialer as a membership card applies directly to a connecting telephone company. The application is generally made by writing the telephone number of the person as a subscriber, and it can be also made by on-line sign-up on the network to a connecting telephone company.

The connecting telephone company which has accepted the application issues an autodialer as a membership card. The autodialer has a pre-registered telephone number of the connecting telephone company and a pre-registered identification number (user ID) identifying the user, and it further has the function of registering telephone numbers of persons to be called up as abbreviated numbers and has means of generating the PB tone of the registered number. This issued autodialer is sent to the applicant identified by the subscriber's telephone number.

The functions of the above autodialer itself are the same as those of the already described fund card, and the autodialer can be used to make automatic dialing and call through the switchboard of the connecting telephone company completely in the same manner. The difference from the fund card is that the host computer performs an addition processing of a billed call charge in the "billing charge management file" of the user ID in accordance with a call charge in place of performing a subtraction processing of a prepaid call charge in accordance with a call charge.

### (Payment of call charge)

As a result of processing of added billed charges, a bill of call charges is issued to the user after a predetermined period of time. Obviously, the payment of the above call charges can be completely similarly made through the store processing terminal used for the purchase of the fund card in a store dealing in fund cards.

Using the ATM function, the payment for the bill can be also made by reading and inputting the bill through a slot 69', and repeating the case of reloading nearly in the same manner as in the case of reloading. That is, when the ③ payment of bill is selected in the step S101 in Fig. 10, an instruction to insert an autodialer (Step S301), inputting of an amount (Step S302) and confirmation (Step S303) are carried out, followed by the payment step P, whereby the payment is effected.

### Industrial Utility

In a conventional prepaid card with an ID number, the ID number, etc., being composed of a large number of digits, so that it is troublesome to dial such lengthy numbers. In the system of the present invention, ID numbers, etc., are registered in the autodialer as abbreviated numbers, so that a call can be made by a simple button operation, which is remarkably convenient.

In the present invention, further, call charges can be paid, for example, in a convenience store, so that a charge can be paid immediately when the charge is not paid or a prepaid charge is deficient. Further, upon payment, the store processing terminal sends the data to the managing host computer to operate the billing charge management file, so that a telephone is connected without any delay, and a call can be resumed.

Further, the present invention is very effective for budget control of telephone charges when the user is an corporate organization. That is, when a company as a corporation obtains a plurality of user IDs so that salespersons, etc., who frequently make phone calls out of office use autodialers as membership cards, the telephone company issues bills together with details to the company, so that a manager of the company can grasp call charges of the each salesperson (user ID) exactly and clearly on the basis of the detailed contents. In this manner, the company can grasp all of the telephones called up with regard to each user ID, so that employees substantially refrain from using the autodialers of the present invention to make private phone calls.

Further, cellular phones are widely used in recent years, and many companies partly share payments of call charges of employees. Since, however, it is difficult to draw a clear line between charges for private calls and charges for company-related calls, useless expenses are caused. According to the present invention, however, employees can use the autodialers of the present invention so long as their calls are company-concerned, so that there is drawn a distinct line between charges for private calls and charges for company-concerned calls. Obviously, therefore, there is no room where useless expenses are caused, and the use of the autodialers is greatly significant for companies.

Differing from general telephone cards and prepaid cards having ID numbers, the autodialer used in the present invention has no coupon information written therein, so that it is not much necessary to take account of a risk of a loss caused by stealing, robbery or losing, and the management thereof is remarkably simplified. For example, large managing costs and excessive inventory costs which transportation company members and managers of convenience stores have paid are no longer necessary.

Moreover, managers are relieved from a conventional heavy mental burden, and the effect thereof cannot be over emphasized.

## Claims

1. A telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store which deals with said autodialer,
said connecting telephone company having a managing host computer for storing and managing information on said autodialer dealt with,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text of the merchandize information and the identification code of the terminal to be sent to said managing host computer, from said stored merchandise information,
a means for displaying a bar code identified by said merchandise code and the telephone number of the connecting telephone company, and
a communication control means for sending the electric data text of the merchandise information and the identification code of the terminal to said managing host computer, which is received and stored,
wherein the telephone rate managing system is characterized in that, when a call using said autodialer is made, said host computer performs a subtraction processing of a prepaid call charge in accordance with a call charge on the basis of the stored merchandise information of said autodialer.

2. A telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store which deals with said autodialer,
said connecting telephone company having a managing host computer for storing and managing information on said autodialer dealt with,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is Connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text for the POS terminal and an electric data text of the merchandize information and the identification code of the terminal to be sent to said managing host computer, from said stored merchandise information,
an output means for outputting the electric data text for the POS terminal assembled in said central control means, as a bar code readable with the POS terminal, and
a communication control means for sending the electric data text of the merchandise information and the identification code of the terminal to said managing host computer, which is received and stored,
wherein the telephone rate managing system is characterized in that, when a call using said autodialer is made, said host computer performs a subtraction processing of a prepaid call charge in accordance with a call charge on the basis of the stored merchandise information of said autodialer.

3. A telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store which deals with said autodialer,
said connecting telephone company having a managing host computer for storing and managing information on said autodialer dealt with,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text for the POS terminal, which electric data text is to be sent to said POS terminal, and an electric data text of the merchandize information and the identification code of the terminal to be sent to said managing host computer, from said stored merchandise information,
a POS output means for outputting the electric data text for the POS terminal assembled in said central control means, and
a communication control means for sending the electric data text of the merchandise information and the identification code of the terminal to said managing host computer, which is received and stored,
wherein the telephone rate managing system is characterized in that, when a call using said autodialer is made, said host computer performs a subtraction processing of a prepaid call charge in accordance with a call charge on the basis of the stored merchandise information of said autodialer.

4. The telephone rate managing system according to claim 3, wherein the communication control means is a communication control means for encrypting the electric data text before sending it to the managing host computer.

5. The telephone rate managing system according to claim 4, wherein the managing host computer has an interface portion for receiving and decrypting the encrypted electric date text sent from said communication control means.

6. The telephone rate managing system according to any one of claims 3 to 5, wherein the communication lines are public telephone lines.

7. The telephone rate managing method using any system of claims 3 to 5, wherein a user of the autodialer generates PB tones from the telephone number of the connecting telephone company, the identification number identifying the telephone user and the pre-registered abbreviated telephone number of a person to be called up,
the generated PB tone is brought close to a speaker of a public telephone, a subscriber's telephone or a cellular phone, to effect automatic dialing,
and, when a call using said autodialer is made, said host computer detects merchandise information data of said user stored, from the identification number of the user of said autodialer and performs the subtraction processing of a prepaid call charge in accordance with a call charge.

8. A telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal provided in a store where a bill for call charges with regard to said autodialer can be paid,
said connecting telephone company having a managing host computer for storing and managing information on the autodialer issued,
said store processing terminal and said managing host computer being interconnected through communication lines,
said store having a POS terminal for managing merchandises dealt with there,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text for the POS terminal, which electric data text is to be sent to said POS terminal, and an electric data text of the merchandize information and the identification code of the terminal to be sent to said managing host computer, from said stored merchandise information,
a POS output means for outputting the electric data text for the POS terminal assembled in said central control means, and
a communication control means for sending the electric data text of the merchandise information and the identification code of the terminal to said managing host computer, which is received and stored,
wherein the telephone rate managing system is characterized in that, when a call using said autodialer is made, said host computer performs an addition processing of a call charge to bill in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

9. The telephone rate managing method using the system of claim 8, wherein a user of the autodialer generates PB tones from the telephone number of the connecting telephone company, the identification number identifying the telephone user and the pre-registered abbreviated telephone number of a person to be called up,
the generated PB tone is brought close to a speaker of a public telephone, a subscriber's telephone or a cellular phone, to effect automatic dialing,
when automatic dialing is made using said autodialer, said host computer performs an addition processing of a call charge to be billed in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

10. A telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal including an automatic cash depositing and paying unit having the function of allowing automatic deposit and payment of cash, provided in a store dealing with said autodialer,
said connecting telephone company having a managing host computer for storing and managing information on the autodialer dealt with ,
said store processing terminal and said managing host computer being interconnected through communication lines,
said automatic cash depositing and paying unit being connected to a host computer of a banking institution managing unit,
said store processing terminal having a pre-registered identification number of the terminal and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text of the merchandize information and the identification code of the terminal to be sent to said managing host computer, from said stored merchandise information, and
a communication control means for sending the electric data text of the merchandise information and the identification code of the terminal to said managing host computer, which is received and stored,
wherein the telephone rate managing system is characterized in that, when a call using said autodialer is made, said host computer performs a subtraction processing of a prepaid call charge in accordance with a call charge on the basis of the stored merchandise information of said autodialer.

11. The telephone rate managing system according to claim 10, wherein the host computer of the banking institution has at least an account of said connecting telephone company.

12. The telephone rate managing method using the system of claim 10 or 11, wherein a user of the autodialer generates PB tones from the telephone number of the connecting telephone company, the identification number identifying the telephone user and the pre-registered abbreviated telephone number of a person to be called up,
the generated PB tone is brought close to a transmitter of a public telephone, a subscriber's telephone or a cellular phone, to effect automatic dialing,
and, when a call using said autodialer is made, said host computer detects merchandise information data of said user stored, tram the identification number of the user of said autodialer and performs the subtraction processing of a prepaid call charge in accordance with a call charge.

13. The telephone rate managing system according to claim 12, wherein the host computer of the banking institute has at least an account of said connecting telephone company.

14. A telephone rate managing system mainly comprising at least
an autodialer having, pre-registered, the telephone number of a connecting telephone company and an identification number for identifying a telephone user, having the function of registering a telephone number of a person to be called up as a registered abbreviated number and having means for generating PB tones of the registered numbers, and
a store processing terminal including an automatic cash depositing and paying unit having the function of allowing automatic deposit and payment of cash, provided in a store where a bill of call charges with regard to said autodialer can be paid,
said connecting telephone company having a managing host computer for storing and managing information on the autodialer issued,
said store processing terminal and said managing host computer being interconnected through communication lines,
said automatic cash depositing and paying unit being connected to a host computer of a banking institution managing unit,
said store processing terminal having a pre-registered identification number and comprising
a first input means for reading and inputting the pre-registered telephone number and identification number when said autodialer is connected thereto,
a second input means for inputting a merchandise code and a transaction code with buttons,
a storage means for storing merchandise information including said telephone number, identification number, merchandise code and transaction code inputted from the first and second input means,
a central control means for assembling an electric data text of the merchandize information and the identification code of the terminal to be sent to said managing host computer, from said stored merchandise information, and
a communication control means for sending the electric data text of the merchandise information and the identification code of the terminal to said managing host computer, which is received and stored,
wherein the telephone rate managing system is characterized in that, when a call using said autodialer is made, said host computer performs an addition processing of a call charge to bill in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

15. The telephone rate managing system according to claim 14, wherein the host computer of the banking institute has at least an account of said connecting telephone company.

16. The telephone rate managing method using the system of claim 14 or 15, wherein a user of the autodialer generates PB tones from the telephone number of the connecting telephone company, the identification number identifying the telephone user and the pre-registered abbreviated telephone number of a person to be called up,
the generated PB tone is brought close to a transmitter of a public telephone, a subscriber's telephone or a cellular phone, to effect automatic dialing,
when automatic dialing is made using said autodialer, said host computer performs an addition processing of a call charge to be billed in accordance with a call charge on the basis of the stored information of said issued autodialer,
that call charges are billed to said user after a predetermined period of time,
that a bill of the call charges is paid in said store, and that data of completion of payment of the bill is sent from said store processing terminal to said host computer.

17. The telephone rate managing system according to claim 16, wherein the host computer of the banking institute has at least an account of said connecting telephone company.
